# EUROPÄISCHE PATENTANMELDUNG

(11) **EP 2 292 467 A1**
(43) Veröffentlichungstag der Anmeldung: **09.03.2011**
(21) Anmeldenummer: 09450158.2
(22) Anmeldetag: 07.09.2009
(51) Int. Cl.: B60Q 1/32, B60Q 5/00

(54) **Vorrichtung zur Abgabe akustischer Signale**

(71) Anmelder: Remus Innovation Forschungs- und Abgasanlagen-Produktionsgesellschaft m.b.H., 8572 Barnbach (AT)
(72) Erfinder: Kresch, Bernhard, 8570 Voitsberg (AT)
(74) Vertreter: Barger, Werner

(57) **Zusammenfassung**

Die Erfindung betrifft eine Vorrichtung zur Abgabe akustischer Signale fahrender Fahrzeuge mit zumindest zwei Rädern mit Radkappen.

Die Erfindung ist **dadurch gekennzeichnet, dass** im Bereich zumindest einer der Radkappen (1) ein die Rotation des Rades nicht mitmachender Teil (2) vorgesehen ist, dass, aufgeteilt auf diesen Teil und die Radkappe, zumindest eine Spule (3) einerseits und zumindest ein Permanentmagnet (4) andererseits vorgesehen sind, dass weiters eine elektronische Schaltung vorgesehen ist, die die Spule(n) elektrisch mit zumindest einem elektroakustischen Wandler (5) verbindet, der die akustischen Signale abgibt, und dadurch, dass Spule(n) und Magnet(e) so angeordnet sind, dass bei der Drehung des Rades sich die Spulen gegenüber den Magneten bewegen, sodass in den Spulen Spannung induziert und Strom generiert und der elektroakustische Wandler über die elektronische Schaltung aktiviert wird.

In einer Umkehr kann die Radkappe stillstehen und ein anderer Teil rotieren.

## Beschreibung

Die Erfindung betrifft eine Vorrichtung zur Abgabe akustischer Signale fahrender Fahrzeuge in Übereinstimmung mit dem Oberbegriff von Anspruch 1.

Es existieren seit einiger Zeit Fahrzeuge, insbesondere elektrisch betriebene Fahrzeuge oder in zumindest einigen Fahrzuständen elektrisch betriebene Fahrzeuge, die sogenannten Hybridfahrzeuge, die über praktisch lautlos funktionierende Antriebe angetrieben werden. Bei derartigen Fahrzeugen besteht die Gefahr, dass andere Verkehrsteilnehmer, die sich aufgrund langjähriger Gewohnheiten in vielen Fällen nach ihrem akustischen Umfeld orientieren, diese Fahrzeuge nicht wahrnehmen und damit sich selbst und andere Verkehrsteilnehmer gefährden.

Es besteht somit ein Bedarf an einem System, das geeignete akustische Signale zur Verfügung stellt und gegebenenfalls auch optische Signale abzugeben in der Lage ist. Für die Annahme eines solchen Systems durch die beteiligten Verkehrskreise ist es notwendig, dass es möglichst ohne zusätzliche Aktivierung funktioniert und in vielen Fällen auch, dass es in bereits bestehende Fahrzeuge einfach und kostengünstig einbaubar ist, somit gute Nachrüstfähigkeit aufweist.

Erfindungsgemäß werden die genannten Ziele in Übereinstimmung mit dem kennzeichnenden Teil des Anspruches 1 dadurch erreicht, dass im Bereich eines der Räder des Fahrzeuges ein die Rotation des Rades nicht mitmachender Teil vorgesehen ist, dass auf diesem Teil und dem Rad Spule und Magnet bzw. Spulen und Magnete so vorgesehen sind, dass bei Drehung des Rades in den Spulen Spannung induziert, Strom generiert und ein elektroakustischer Wandler über eine elektronische Schaltung passend aktiviert wird.

In einer Ausgestaltung kann vorgesehen sein, dass ein Akkumulator oder Kondensator zur Speicherung elektrischer Energie im Schaltkreis angeordnet ist, der bei kleinen Drehzahlen, die vom System schon als Bewegung erfasst werden, aber zur Betätigung des elektroakustischen Wandlers noch nicht ausreichen, diesen aktivieren.

Die vom System abgegebenen akustischen Signale werden bevorzugt ihrer Lautstärke und ihrer Charakteristik nach an übliche Motor- bzw. Fahrzeuggeräusche angepasst, können aber selbstverständlich auch anders, insbesondere individuell, gestaltet sein.

Die Erfindung wird im Folgenden anhand der Zeichnung anhand einiger Ausführungsbeispiele näher erläutert: Dabei zeigt
die Fig. 1 eine erste Ausführungsform der Erfindung,
die Fig. 2 eine Variante und
die Fig. 3 und 4 zwei weitere Varianten.

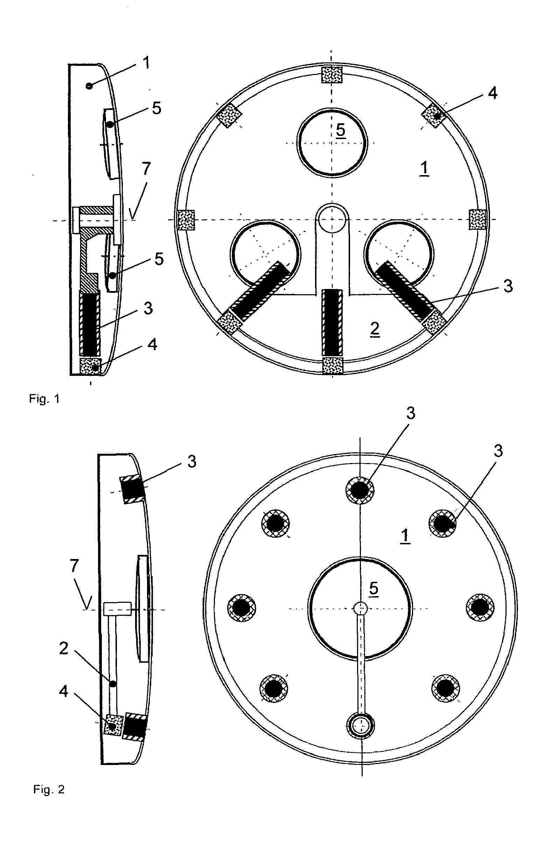

Fig. 1 zeigt in einem schematischen Schnitt und in einer schematischen Draufsicht bei durchsichtig angenommener Radkappe eine erste Ausführungsform der Erfindung. An der Radkappe 1 sind entlang eines gemeinsamen Umfangs eine Vielzahl von Permanentmagneten 4 befestigt. Die Rotation des Rades und damit der Radkappe nicht mitmachend, beispielsweise pendelnd um eine Pendelachse, die fluchtend mit der Radachse 7 verläuft, aufgehängt, ist eine Generatoreinheit 2, der mehrere Spulenkörper 3 trägt. Während der Bewegung der Radkappe 1 bewegen sich die Permanentmagneten 4 dicht an den Spulenkörpern 3 vorbei, sodass sie in diesen Spannung induzieren und damit Strom generieren. Dieser Strom wird durch eine an der Generatoreinheit 2 vorgesehene, nicht näher dargestellte Elektronik passend - etwa über Schleifringe - den Schallwandlern 5 zugeführt und von ihnen in Schallenergie gewandelt.

Die Fig. 2 zeigt eine Variante, die in gewisser Hinsicht eine kinematische Umkehr der erstgenannten Ausführungsform ist: Hier trägt die Radkappe 1 die Spulen 3 und einen elektroakustischen Wandler 5 samt den nicht extra dargestellten elektronischen Bauteilen, am Pendel 2 sitzt ein Permanentmagnet 4, es können selbstverständlich auch hier mehrere in passendem Abstand voneinander vorgesehen sein, und gelangt bei Drehung des Rades in die Nachbarschaft der einzelnen Spulen 3. In diesen wird Spannung, damit letztlich Strom induziert und über die genannte Elektronik der Schallwandler angesteuert.

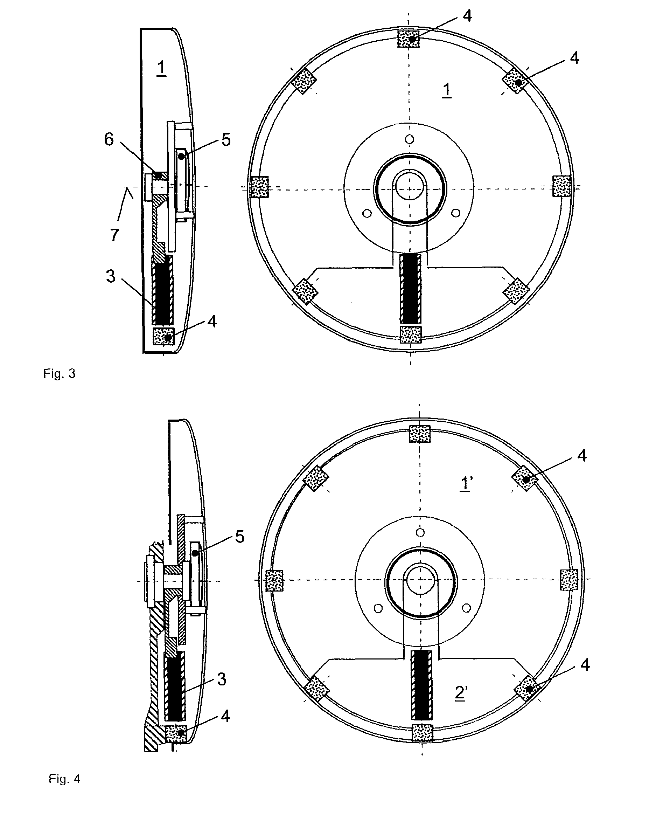

Die Fig. 3 stellt eine Variante dar, bei der der elektroakustische Wandler 5 ebenfalls im Zentrum der Kappe 1 angeordnet ist, sich aber mit der Spule 3 und mit dem zugehörigen Spulenträger und der Elektronik, die wiederum nicht extra dargestellt ist, eine Einheit bildet, die sich mittels eines Lagers 6 um die Radachse 7 gegenüber der Kappe 1 drehen kann (sich gegenüber dem Fahrzeug somit nicht oder nur pendelnd bewegt). An der Kappe 1 fest montiert sind mehrere Permanentmagneten 4, die an der Spule 3 vorüberrotieren.

Die Fig. 4 stellt eine Variante dar, bei der die Kappe 1, passend gelagert, sich nicht mit dem Rad mitdreht, die Magnete 4 befinden sich auf einem Bauteil, der sich mit dem Rad mitdreht, die Spulen 3, der Spulenkörper 2, die Elektronik und der elektroakustische Wandler 5 sind in der Kappe 1 und in Ruhe gegenüber dem Fahrzeugkörper, von Einfedervorgängen etc. abgesehen.

Wie leicht aus den Darlegungen und der Zeichnung hervorgeht, ist es möglich, nicht nur akustische Signale abzugeben, auch optische Signale, beispielsweise mittels LEDs, die hohe Strahlkraft bei geringem Energieverbrauch haben, sind dafür besonders geeignet.

Durch die Energieautarkie ist die erfindungsgemäße Vorrichtung in all ihren Varianten praktisch universell einsetzbar. Dies bringt auch eine hervorragende Fähigkeit zur Nachrüstbarkeit mit sich, es ist dazu nur notwendig die Radkappen zu tauschen. Wenn eine erfindungsgemäße Vorrichtung bereits bei der Herstellung des Fahrzeuges vorgesehen ist, können natürlich weitere Möglichkeiten vorgesehen sein: So ist es durch kontaktlose Signalgeber möglich, die eventuell vorgesehenen Lichteffekte mit dem Einschalten der Fahrzeugbeleuchtung zu koppeln, es ist möglich die Anlage, beispielsweise beim Befahren der Autobahn, durch eine externe Schaltung zu deaktivieren, es kann vorgesehen sein, die akustischen Signale auf Wunsch zu ändern, beispielsweise auch im Zusammenhang mit der Fahrzeugbeleuchtung, um bei Tageslicht akustische Signale mit größerer Intensität abzugeben als bei Dunkelheit und dergleichen mehr.

In Kenntnis der Erfindung ist die Konfigurierung und Herstellung der notwendigen elektrischen Schaltung für den Fachmann auf dem Gebiete der Elektroakustik ein Leichtes, ebenso die Auswahl, die Lagerung und der Anschluss des bzw. der elektroakustischen Wandler. Auch die mechanische Ausbildung der Vorrichtung ist für den Fachmann auf dem Gebiet der Autoelektrik in Kenntnis der Erfindung kein Problem, da mechanisch ähnlich belastete Bauteile bei Bremsassistenten, bei der Überwachung des Reifendrucks und dergleichen mehr zum Vergleich und als Modell herangezogen werden können.

Die Erfindung ist nicht auf die dargestellten und beschriebenen Ausführungsbeispiele begrenzt, sondern kann verschiedentlich abgewandelt werden. So sind insbesondere die Form und die Abmessungen der einzelnen Scheiben und Magnete, deren Abstand von der Drehachse und vieles mehr in weiten Grenzen wählbar, ohne dass dies die Erfindung beeinträchtigte.

## Patentansprüche

1. Vorrichtung zur Abgabe akustischer Signale fahrender Fahrzeuge mit zumindest zwei Rädern mit Radkappen, **dadurch gekennzeichnet, dass** im Bereich zumindest einer der Radkappen (1) ein die Rotation des Rades nicht mitmachender Teil (2) vorgesehen ist, dass, aufgeteilt auf diesen Teil und die Radkappe, zumindest eine Spule (3) einerseits und zumindest ein Permanentmagnet (4) andererseits vorgesehen sind, dass weiters eine elektronische Schaltung vorgesehen ist, die die Spule(n) elektrisch mit zumindest einem elektroakustischen Wandler (5) verbindet, der die akustischen Signale abgibt, und dadurch, dass Spule(n) und Magnet(e) so angeordnet sind, dass bei der Drehung des Rades sich die Spulen gegenüber den Magneten bewegen, sodass in den Spulen Spannung induziert und Strom generiert und der elektroakustische Wandler über die elektronische Schaltung aktiviert wird.

2. Vorrichtung zur Abgabe akustischer Signale fahrender Fahrzeuge mit zumindest zwei Rädern mit Radkappen, **dadurch gekennzeichnet, dass** im Bereich zumindest einer der die Rotation des Rades nicht mitmachende Radkappen (1) ein die Rotation des Rades mitmachender Teil (2) vorgesehen ist, dass, aufgeteilt auf diesen Teil und die Radkappe, zumindest eine Spule (3) einerseits und zumindest ein Permanentmagnet (4) andererseits vorgesehen sind, dass weiters eine elektronische Schaltung vorgesehen ist, die die Spule(n) elektrisch mit zumindest einem elektroakustischen Wandler (5) verbindet, der die akustischen Signale abgibt, und dadurch, dass Spule(n) und Magnet(e) so angeordnet sind, dass bei der Drehung des Rades sich die Spulen gegenüber den Magneten bewegen, sodass in den Spulen Spannung induziert und Strom generiert und der elektroakustische Wandler über die elektronische Schaltung aktiviert wird.

3. Vorrichtung nach Anspruch 1 oder 2, **dadurch gekennzeichnet, dass** mehrere Magnete (4) entlang eines Kreises mit Mittelpunkt auf der Radachse (7) auf der Radkappe (1) angeordnet sind und dass mehrere Spulen (3) auf einem um eine Pendelachse, die mit der Radachse (7) fluchtet, pendelnden Pendel (2) angeordnet sind.

4. Vorrichtung nach einem der Ansprüche 1 bis 3, **dadurch gekennzeichnet, dass** die elektronische Schaltung auf dem Bauteil angeordnet ist, der die Spule(n) (3) trägt.

5. Vorrichtung nach einem der voranstehenden Ansprüche, wobei die elektronische Schaltung auf dem einen der Bauteile und der (die) elektroakustischen Wandler (5) am anderen vorgesehen sind, **dadurch gekennzeichnet, dass** sie elektrisch mittels Schleifringen verbunden sind.
